# FASCICULE DE BREVET EUROPEEN

(11) **EP 1 172 910 B1**
(45) Date de publication et mention de la délivrance du brevet: **08.09.2010**
(21) Numéro de dépôt: 01401804.8
(22) Date de dépôt: 05.07.2001
(51) Int. Cl.: H02G 3/04

(54) **Colonne technique pour le support d'appareillages de commande et/ou de distribution d'énergie, et/ou le cheminement de câbles ou de conducteurs de transport d'énergie**
Versorgungssäule für Geräte zur Schaltung bzw. Energieverteilung sowie für die Führung von Kabeln oder Leiter zum Energietransport
Service pole for apparatus for control and/or energy distribution, and/or the passage of cables or conductors for the transport of energy

(30) Priorité: 11.07.2000 FR 0009044
(43) Date de publication de la demande: 16.01.2002
(73) Titulaire: LEGRAND, 87000 Limoges (FR); Legrand SNC, 87000 Limoges (FR)
(72) Inventeur: Jarry, Patrice, 72140 Mont Saint Jean (FR); Vende, Tristan, 87100 Limoges (FR)
(74) Mandataire: Santarelli

(56) Documents cités:
- EP-A- 0 945 945
- WO-A-91/07791
- FR-A- 2 727 577
- US-A- 4 534 147

## Description

La présente invention concerne de manière générale les colonnes "techniques" destinées au support d'appareillages de commande et/ou de distribution d'énergie, et au cheminement de câbles ou de conducteurs nécessaires à leur desserte.

De telles colonnes sont placées dans des pièces de grande surface, telles que des bureaux paysagers, et sont maintenues verticalement entre le plancher et le plafond. Elles peuvent également se présenter sous la forme de potelets dont la hauteur est telle que leur sommet arrive au niveau d'un plateau de bureau.

Ces colonnes permettent de supporter des appareillages électriques comme des prises de courant, des interrupteurs, des porte-fusibles, des sectionneurs, des disjoncteurs, ou des appareillages informatiques tels que des prises informatiques, ou encore des appareillages téléphoniques tels que des prises de téléphone.

Elles permettent également le cheminement des câbles ou des conducteurs auxquels lesdits appareillages sont connectés. Ces câbles ou conducteurs proviennent du sol ou du plafond et sont reçus à l'intérieur de ces colonnes dans des goulottes de cheminement de câbles ou de conducteurs.

L'invention concerne plus particulièrement une colonne comportant une ossature présentant des ailes disposées en étoile qui délimitent deux à deux des goulottes, lesdites ailes étant pourvues, à leurs extrémités, de moyens d'encliquetage de tronçons de couvercle de fermeture desdites goulottes.

On connaît du document WO 96/24974 un conduit de cheminement de câbles ou de conducteurs, qui présente un corps monobloc présentant des ailes disposées en étoile qui délimitent deux à deux des compartiments, et sont pourvues, à leurs extrémités, de moyens d'encliquetage de tronçons de couvercle formés par des portions de paroi cylindrique de telle sorte qu'une fois fermé ledit conduit présente une section circulaire.

On connaît également du document EP 0 828 326 une colonne "technique" dans laquelle l'ossature présente des ailes disposées en étoile qui délimitent deux à deux des goulottes, chacune des extrémités desdites ailes se prolongeant par des portions de paroi cylindrique constituant une partie de la paroi cylindrique externe de ladite colonne et auxquelles viennent se raccorder des tronçons de couvercle de fermeture formés également par des portions de paroi cylindrique de telle sorte qu'une fois fermée ladite colonne présente une section circulaire.

L'inconvénient majeur des colonnes "techniques" déjà connues à section circulaire est qu'elles présentent un volume interne réduit pour recevoir, d'une part, des appareillages quelconques et, d'autre part, des câbles ou conducteurs auxquels lesdits appareillages sont connectés. Ces appareillages supportés par de telles colonnes forment alors des saillies importantes à la surface externe de celles-ci, ce qui est inesthétique.

Pour augmenter le volume interne d'une colonne "technique", il a été envisagé de la réaliser avec une section elliptique.

Une colonne de ce type est notamment décrite dans le document FR 2 727 577. Toutefois, cela nécessite de réaliser l'ossature en deux parties assemblées, ce qui rend complexe et plus coûteux la fabrication d'une telle colonne.

La présente invention propose alors, pour remédier aux inconvénients précités, une nouvelle colonne pour le support d'appareillages de commande et/ou de distribution d'énergie, et/ou le cheminement de câbles ou de conducteurs de transport d'énergie, présentant, d'une part, un grand volume interne pour un coût de fabrication restreint et, d'autre part, une esthétique améliorée dans la mesure où les appareillages supportés par ladite colonne s'accordent harmonieusement à la forme de l'enveloppe externe de celle-ci.

Plus particulièrement, selon l'invention, ladite colonne comporte une ossature présentant des ailes disposées en étoile qui délimitent deux à deux des goulottes, lesdites ailes étant pourvues, à leurs extrémités, de moyens d'encliquetage de tronçons de couvercle de fermeture desdites goulottes. Elle est **caractérisée en ce que**, vus en coupe transversale, lesdits tronçons de couvercle présentent chacun une forme arrondie avec un sommet et, de part et d'autre de ce sommet, deux extrémités, de manière que, dans l'état fermé de ladite colonne, la distance, définie entre la corde passant par les sommets de deux tronçons de couvercle adjacents et l'enveloppe externe de ladite colonne, est inférieure à la distance définie entre la corde passant par les extrémités d'un tronçon de couvercle et l'enveloppe externe de ladite colonne.

D'autres caractéristiques avantageuses et non limitatives de la colonne selon l'invention sont les suivantes :
- ladite ossature est une pièce monobloc ;
- les moyens d'encliquetage, prévus à l'extrémité des ailes de l'ossature pour le montage des tronçons de couvercle, sont aptes à coopérer avec des moyens complémentaires prévus sur au moins un boîtier pour le montage dudit appareillage dans la colonne ;
- chaque appareillage est monté sur l'ossature de ladite colonne de manière à faire saillie de l'enveloppe externe de celle-ci ;
- l'extrémité de chaque aile présente la forme d'une ancre dont chacun des bras comporte, du côté tourné vers l'intérieur de ladite colonne, un crochet pour l'encliquetage d'un tronçon de couvercle ;
- du côté extérieur, les bras de chaque ancre présentent une surface concave d'étendue limitée qui donne l'aspect d'une rainure à la jonction de deux tronçons de couvercle;
- chaque aile comporte, en regard de la face interne de chaque bras d'extrémité, une gorge d'arc-boutement d'une patte d'encliquetage d'un tronçon de couvercle;
- l'ossature comprend, en son centre, un conduit tubulaire apte à accueillir une perche de fixation au plafond, cette perche portant un système de mise en appui de ladite ossature sur le sol ;
- ledit conduit tubulaire porte, sur sa face interne, des nervures longitudinales délimitant deux à deux des rainures de montage à coulissement de ladite perche ;
- ledit conduit tubulaire porte, sur sa face externe formant le fond desdites goulottes, des cloisons radiales dont la longueur est inférieure à celle desdites ailes, chaque cloison radiale délimitant deux compartiments en fond de goulotte ;
- l'ossature présente quatre ailes délimitant deux à deux quatre goulottes de même capacité de câblage;
- elle porte, à son extrémité supérieure, un cache de finition en forme de coupelle et, à son extrémité inférieure, un socle de support sur le sol ;
- ladite ossature est réalisée en matière métallique ;
- lesdits tronçons de couvercle sont réalisés en matière plastique ; et
- lesdits tronçons de couvercle sont réalisés en matière métallique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de côté d'une demi-colonne "technique" selon l'invention ;
- la figure 2 est une vue en bout du côté de l'extrémité supérieure de la demi-colonne de la figure 1 ;
- la figure 3 est une vue en coupe transversale au niveau de l'appareillage électrique de la demi-colonne de la figure 1 ;
- les figures 4a et 4b sont des vues de détail d'une extrémité d'une aile de l'ossature de la demi-colonne de la figure 1 permettant de visualiser le montage des tronçons de couvercle sur ladite ossature ;
- la figure 5 est une vue de côté d'une colonne "technique" selon invention ;
- la figure 6 est une vue de dessous de la colonne de la figure 5 ;
- la figure 7 est une vue en perspective de détail du système de mise en appui sur le sol de l'ossature de la colonne de la figure 5 ; et
- les figures 8a et 8b sont des vues en coupe de deux variantes de réalisation de la perche représentée sur la figure 7.

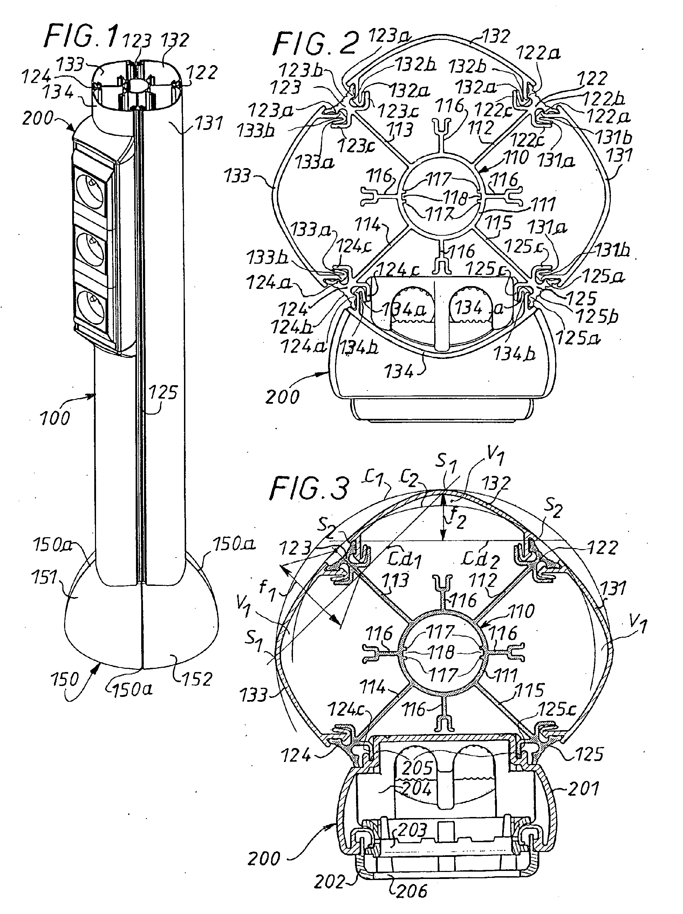

Sur les figures 1 à 3, on a représenté une demi-colonne ou potelet "technique" 100 pour le support d'appareillages, ici électriques, et le cheminement de câbles ou de conducteurs nécessaires à la desserte desdits appareillages.

Cette demi-colonne ou potelet 100 est représenté sans son cache supérieur.

Bien entendu, cette demi-colonne 100 peut également supporter des appareillages de commande et/ou de distribution d'énergie tels que des appareillages informatiques et téléphoniques.

La demi-colonne 100 comprend une ossature 110 qui est généralement un profilé en aluminium filé et coupé à la longueur désirée, de sorte qu'elle constitue une pièce monobloc.

L'ossature 110 comprend, en son centre, un conduit tubulaire 111 et, à partir de ce conduit tubulaire 111, des ailes 112, 113, 114, 115 disposées en étoile et qui délimitent deux à deux des goulottes pour le cheminement de câbles ou de conducteurs électriques et pour le montage d'un boîtier 201 d'appareillages électriques 200.

Ici, ladite ossature 110 comportent quatre ailes 112, 113, 114, 115 définissant entre elles quatre goulottes.

En outre, le conduit tubulaire 111 porte, sur sa face externe formant le fond desdites goulottes, des cloisons radiales 116 dont la longueur est inférieure à celle desdites ailes 112, 113, 114, 115, chaque cloison radiale 116 délimitant deux compartiments en fond de goulotte. Ces cloisons radiales 116 permettent la mise en place par encliquetage ou par vissage d'accessoires tels que cloison de séparation, bornes de mise à la terre, colliers, etc..

Les ailes 112, 113, 114, 115 sont pourvues, à leurs extrémités 122, 123, 124, 125, de moyens d'encliquetage de tronçons de couvercle de fermeture 131, 132, 133, 134.

Avantageusement, lesdits tronçons de couvercle 131, 132, 133, 134 présentent chacun une forme arrondie avec un sommet S₁ (voir figure 3) et, de part et d'autre de ce sommet S₁, deux extrémités S₂ de manière que, dans l'état fermé de la demi-colonne 100, la flèche f₁, définie entre la corde Cd₁ passant par les sommets S₁ de deux tronçons de couvercle adjacents 132, 133 et l'enveloppe externe de ladite demi-colonne, est inférieure à la flèche f₂ définie entre la corde Cd₂ passant par les extrémités S₂ d'un tronçon de couvercle 132 et l'enveloppe externe de ladite demi-colonne 100.

Un tel agencement de tronçons de couvercle permet de donner à la demi-colonne une fois fermée une section de forme sensiblement carrée et de lui conférer un volume interne utile optimisé par rapport à son encombrement externe.

En effet, comme cela apparaît clairement sur la figure 3, on gagne en volume interne utile, dans cette colonne 100, le volume V₁ situé entre le cercle externe C₁ passant par les sommets S₁ des tronçons de couvercle, et le cercle interne C₂ passant par les extrémités S₂ desdits tronçons de couvercle, en utilisant pourtant une ossature 110 correspondant à une colonne de section circulaire C₂.

Ainsi, on obtient dans la colonne 100 un volume utile important pour une ossature réduite en encombrement, ce qui permet de réduire son coût de fabrication. En outre, le volume utile interne supplémentaire V₁ participe à réduire la saillie du boîtier 201 de l'appareillage électrique par rapport à la surface externe des tronçons de couvercle.

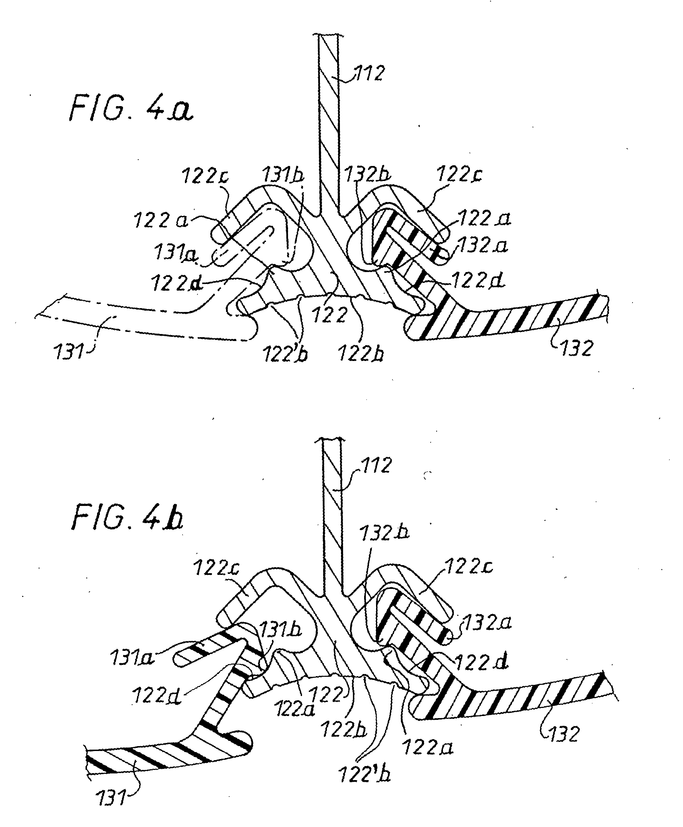

L'extrémité 122, 123, 124, 125 de chaque aile 112, 113, 114, 115 de l'ossature 110 présente la forme d'une ancre dont chacun des bras comporte, du côté tourné vers l'intérieur de ladite demi-colonne 100, un crochet 122a, 123a, 124a, 125a, pour l'encliquetage d'un tronçon de couvercle 131, 132, 133, 134 (voir figures 2, 4a, 4b).

Du côté extérieur, les bras de chaque ancre 122, 123, 124, 125 présentent une surface concave d'étendue limitée 122b, 123b, 124b, 125b qui donne l'aspect d'une rainure à la jonction de deux tronçons de couvercle 131, 132, 133, 134.

Comme le montrent plus particulièrement les figures 4a et 4b, sur la surface concave externe 122b de l'extrémité 122 de chaque aile 112 de l'ossature 110, il est prévu des rainures 122'b longitudinales conférant à la colonne une certaine esthétique.

Comme cela apparaît plus clairement sur les figures 4a et 4b, les bras de chaque ancre d'extrémité 122 de chaque aile 112 présentent, du côté tourné vers l'intérieur de ladite colonne, entre chaque crochet 122a et l'extrémité de jonction avec la surface concave externe 122b, une surface concave 122d tournée vers l'intérieur, formant une rampe de montage d'une patte d'encliquetage d'un tronçon de couvercle 131, 132

En outre, chaque aile 112, 113, 114, 115 comporte, en regard de la face interne de chaque bras d'extrémité portant les crochets 122a, 123a, 124a, 125a, une gorge d'arc-boutement délimitée par une languette courbe 122c, 123c, 124c, 125c.

Les moyens complémentaires prévus aux extrémités des tronçons de couvercle 131, 132, 133, 134 pour le montage sur les extrémités des ailes 112, 113, 114, 115 de l'ossature 110 de la demi-colonne 100, comprennent des pattes d'encliquetage pourvues, à leur extrémité libre, d'un bourrelet 131b, 132b, 133b, 134b destiné à venir se bloquer contre un crochet 122a, 123a, 124a, 125a prévu à l'extrémité des ailes 112, 113, 114, 115 de l'ossature 110.

En outre, chaque patte d'encliquetage portée par les tronçons de couvercle 131, 132, 133, 134 comprend une portion d'extrémité repliée 131a, 132a, 133a, 134a formant languette élastique.

Ainsi, comme le montrent les figures 4a et 4b, pour mettre en place un tronçon de couvercle 131 sur l'ossature 110, chaque patte d'encliquetage dudit tronçon est engagée dans une gorge d'arc-boutement formée entre la languette courbe 122c portée à l'extrémité d'une aile de l'ossature et l'extrémité en forme d'ancre de cette aile, en glissant sur la rampe de montage 122d jusqu'à ce que le bourrelet 131b franchisse le crochet 122a porté par ladite extrémité en forme d'ancre de l'aile correspondante. La languette courbe 122c d'arc-boutement vient alors presser la portion d'extrémité repliée 131a correspondante de la patte d'encliquetage du tronçon de couvercle 131 pour la contraindre dans ladite gorge d'arc-boutement et maintenir ainsi le bourrelet 131b porté par la patte d'accrochage du tronçon en appui contre le crochet 122a de ladite extrémité de l'aile 112 de l'ossature 110.

Comme le montre plus particulièrement la figure 3, l'appareillage électrique 200 monté dans la demi-colonne 100 comporte un boîtier 201 fermé destiné à recevoir l'appareillage électrique monté sur un support 203 qui obture l'ouverture dudit boîtier, et portant dans son fond un serre-câble 204, le tout étant recouvert d'une plaque de façade 202 venant à effleurement d'une plaque de façade 206 de l'appareillage électrique non représenté.

Le boîtier 201 de l'appareillage électrique 200 est monté sur les languettes courbes 124c, 125c d'arc-boutement portées par les ailes 114, 115 de l'ossature 110.

Les languettes courbes 124c, 125c d'arc-boutement sont engagées dans une rainure 205 correspondante prévue sur la face externe du boîtier 201 de l'appareillage électrique 200, en étant légèrement écartées de leur position initiale, par déformation élastique.

Ainsi monté sur l'ossature 110, l'appareillage électrique 200 fait saillie de l'enveloppe externe de ladite colonne. La saillie formée par l'appareillage électrique 200 est cependant limitée visuellement par les sommets S₁ des tronçons de couvercle 131, 133 adjacents audit appareillage électrique 200, qui permettent de masquer, vue de côté, une partie de la saillie débordante de la surface externe de ladite demi-colonne 100.

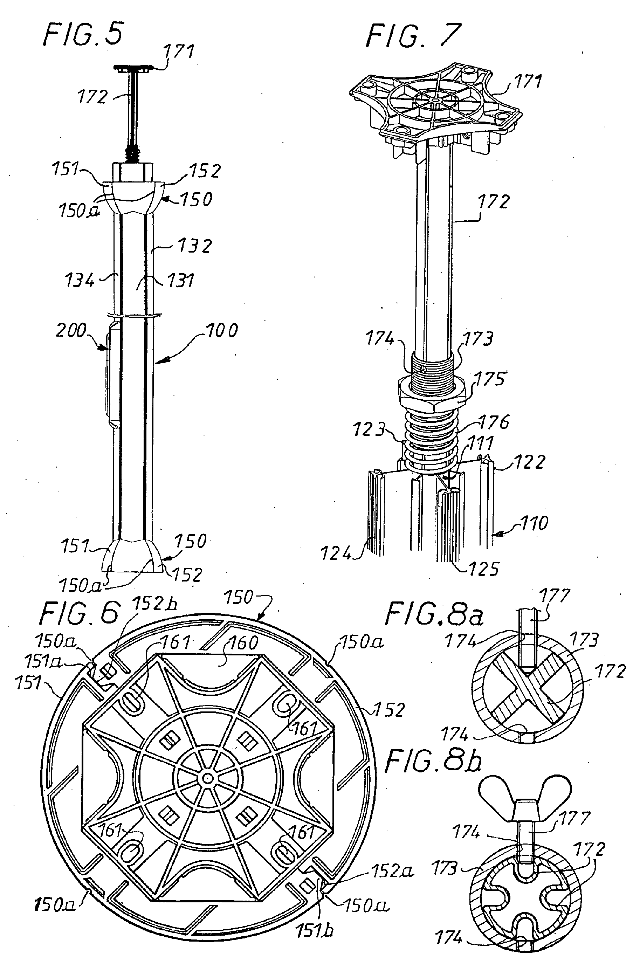

En outre, l'ossature 110 de la colonne est solidarisée, à son extrémité inférieure, à un socle de support 160, représenté plus particulièrement sur la figure 6, par engagement à force par exemple ou par tout autre moyen déjà connu.

Ce socle 160 présente, ici, une forme octogonale plane percée d'orifices 161 pour permettre sa fixation sur le sol via des moyens de fixation tels que des vis.

La jonction entre le socle 160 et la demi-colonne 100 est masquée par un cache de finition 150 en forme de coupelle.

Ce cache de finition 150 est formé de deux demi-coques 151, 152 assemblées par encliquetage au moyen d'un système de coopération rainures 151a, 152a et nervures 151b, 152b.

Au niveau de l'encliquetage des deux demi-coques 151, 152 du cache de finition 150, il est formé alors une rainure 150a qui, pour une question d'esthétique, est reproduite sur la surface externe de chaque demi-coque 151, 152, à mi-chemin entre lesdits systèmes de coopération par encliquetage.

Ainsi, vu de l'extérieur, le cache de finition 150 semble être formé d'une seule pièce rainurée ou de quatre parties assemblées.

Les rainures 150a formées sur le cache de finition 150 s'étendent dans le prolongement des rainures formées par les surfaces externes concaves 122b, 123b, 124b, 125b des extrémités 122, 123, 124, 125 des ailes 112, 113, 114, 115 de l'ossature 110.

Sur la figure 5, on a représenté une colonne 100 qui s'étend du sol au plafond, ou plus exactement du sol à un faux plafond non représenté.

Elle est cependant identique du point de vue de sa construction, c'est-à-dire du point de vue de son ossature et de ses tronçons de couvercle de fermeture, à la demi-colonne 100 décrite en référence aux figures précédentes.

Cette colonne 100 est maintenue entre le sol et le plafond par l'intermédiaire d'une perche 172 portant un système de mise en appui de l'ossature 110 sur le sol.

Cette perche 172 est fixée au plafond, et est introduite en partie dans le conduit tubulaire 111 de l'ossature 110 (voir figure 7).

A son extrémité supérieure située à l'extérieur de la colonne, elle est raccordée à une plate-forme 171 pourvue d'orifices permettant le passage de moyens de fixation au plafond. Dans la forme de réalisation représentée, la plate-forme 171 est identique au socle de support 160.

Le conduit tubulaire 111 de l'ossature porte, sur sa face interne, des nervures longitudinales 117 délimitant deux à deux des rainures 118 de montage à coulissement de ladite perche 172 qui présente à cet effet une section en étoile ou en trèfle à quatre feuilles, comme le montrent plus particulièrement les figures 8a et 8b. La coopération entre les nervures longitudinales définies sur la perche 172 et les rainures 118 de montage du conduit tubulaire 111 constitue un moyen de blocage en rotation de la perche dans le conduit tubulaire.

Le système de mise en appui de la colonne comporte un manchon fileté 173 enfilé sur la perche et positionné à proximité de l'extrémité supérieure de l'ossature 110.

Ce manchon fileté 173 est immobilisé par rapport à la perche 172 au moyen d'une vis papillon 177 introduite dans une ouverture 174 correspondante prévue dans le manchon fileté de sorte que l'extrémité de la vis papillon 177 filetée vienne se coincer entre deux ailes de la perche 172 (voir figures 8a, 8b).

En outre, le système de mise en appui comprend un ressort hélicoïdal 176 enfilé sur le manchon fileté 173 et coincé entre l'ossature 110 et un écrou 175 vissé sur le manchon fileté 173.

En vissant l'écrou 175 sur le manchon fileté 173, on peut comprimer le ressort hélicoïdal 176 de façon à ce qu'il exerce un effort de pression vers le sol sur l'ossature 110 de la colonne 100.

L'ensemble de la perche 172 et du système de mise en appui est ici masqué par le faux plafond non représenté arrivant à effleurement de l'extrémité supérieure de la colonne 100 représentée sur la figure 5.

La jonction entre la partie supérieure de la colonne 100 et le faux plafond est masquée par un cache de finition 150 identique au cache de finition masquant la jonction entre le socle 160 et la colonne 100.

Ce cache de finition 150 est en forme de coupelle et est engagé à coulissement sur la colonne 100, comme le montre plus particulièrement la figure 5.

Alors que l'ossature 110 est réalisée avantageusement en matière métallique telle que de l'aluminium, lesdits tronçons de couvercle 131, 132, 133, 134 peuvent être réalisés en matière plastique ou en matière métallique.

Lorsqu'ils sont réalisés en matière plastique, ils peuvent être recouverts d'un revêtement de peinture donnant l'aspect du métal. Ils peuvent être également réalisés en matière métallique et recouverts d'un revêtement donnant un aspect plastique.

La présente invention n'est nullement limitée au mode de réalisation décrit et représenté, mais l'homme du métier saura y apporter toute variante conforme à son étendue telle que définie dans les revendications.

## Revendications

1. Colonne (100) pour le support d'appareillages de commande et/ou de distribution d'énergie (200), et/ou le cheminement de câbles ou de conducteurs de transport d'énergie, comportant une ossature (110) présentant des ailes (112, 113, 114, 115) disposées en étoile qui délimitent deux à deux des goulottes, lesdites ailes étant pourvues, à leurs extrémités (122, 123, 124, 125), de moyens d'encliquetage de tronçons de couvercle de fermeture (131, 132, 133, 134) desdites goulottes, **caractérisée en ce que**, vus en coupe transversale, lesdits tronçons de couvercle (131, 132, 133, 134) présentent chacun une forme arrondie avec un sommet (S₁) et, de part et d'autre de ce sommet (S₁), deux extrémités (S₂), de manière que, dans l'état fermé de ladite colonne, la distance (f₁), définie entre la corde (Cd₁) passant par les sommets (S₁) de deux tronçons de couvercle adjacents (131, 132, 133, 134) et l'enveloppe externe de ladite colonne, est inférieure à la distance (f₂) définie entre la corde (Cd₂) passant par les extrémités (S₂) d'un tronçon de couvercle (131, 132, 133, 134) et l'enveloppe externe de ladite colonne.

2. Colonne (100) selon la revendication 1, **caractérisée en ce que** ladite ossature (110) est une pièce monobloc.

3. Colonne (100) selon l'une des revendications 1 ou 2, **caractérisée en ce que** les moyens d'encliquetage, prévus à l'extrémité (122, 123, 124, 125) des ailes (112, 113, 114, 115) de l'ossature (110) pour le montage des tronçons de couvercle (131, 132, 133, 134), sont aptes à coopérer avec des moyens complémentaires prévus sur au moins un boîtier (201) pour le montage dudit appareillage (200) dans la colonne.

4. Colonne selon l'une des revendications 1 à 3, **caractérisée en ce que** chaque appareillage (200) est monté sur l'ossature (110) de ladite colonne de manière à faire saillie de l'enveloppe externe de celle-ci.

5. Colonne selon l'une des revendications 1 à 4, **caractérisée en ce que** l'extrémité (122, 123, 124, 125) de chaque aile (112, 113, 114, 115) présente la forme d'une ancre dont chacun des bras comporte, du côté tourné vers l'intérieur de ladite colonne, un crochet (122a, 123a, 124a, 125a) pour l'encliquetage d'un tronçon de couvercle (131, 132, 133, 134).

6. Colonne (100) selon la revendication 5, **caractérisée en ce que**, du côté extérieur, les bras de chaque ancre présentent une surface concave (122b, 123b, 124b, 125b) d'étendue limitée qui donne l'aspect d'une rainure à la jonction de deux tronçons de couvercle (131, 132, 133, 134).

7. Colonne (100) selon l'une des revendications 5 ou 6, **caractérisée en ce que** chaque aile (112, 113, 114, 115) comporte, en regard de la face interne de chaque bras d'extrémité, une gorge d'arc-boutement d'une patte d'encliquetage d'un tronçon de couvercle (131, 132, 133, 134).

8. Colonne (100) selon l'une des revendications précédentes, **caractérisée en ce que** l'ossature (110) comprend, en son centre, un conduit tubulaire (111) apte à accueillir une perche (172) de fixation au plafond, cette perche (172) portant un système de mise en appui de ladite ossature (110) sur le sol.

9. Colonne (100) selon la revendication 8, **caractérisée en ce que** ledit conduit tubulaire (111) porte, sur sa face interne, des nervures longitudinales (117) délimitant deux à deux des rainures (118) de montage à coulissement de ladite perche (172).

10. Colonne (100) selon l'une des revendications 8 ou 9, **caractérisée en ce que** ledit conduit tubulaire (111) porte, sur sa face externe formant le fond desdites goulottes, des cloisons radiales (116) dont la longueur est inférieure à celle desdites ailes (112, 113, 114, 115), chaque cloison radiale (116) délimitant deux compartiments en fond de goulotte.

11. Colonne (100) selon l'une des revendications précédentes, **caractérisée en ce que** l'ossature (110) présente quatre ailes (112, 113, 114, 115) délimitant deux à deux quatre goulottes de même capacité de câblage.

12. Colonne (100) selon l'une des revendications précédentes, **caractérisée en ce qu'**elle porte, à son extrémité supérieure, un cache de finition (150) en forme de coupelle et, à son extrémité inférieure, un socle (160) de support sur le sol.

13. Colonne (100) selon l'une des revendications précédentes, **caractérisée en ce que** ladite ossature (110) est réalisée en matière métallique.

14. Colonne (100) selon l'une des revendications précédentes, **caractérisée en ce que** lesdits tronçons de couvercle (131, 132, 133, 134) sont réalisés en matière plastique.

15. Colonne (100) selon l'une des revendications précédentes, **caractérisée en ce que** lesdits tronçons de couvercle (131, 132, 133, 134) sont réalisés en matière métallique.

## Claims

1. A column (100) for supporting control and/or power distribution equipment (200) and/or for routing power supply conductors or cables, said column including a skeleton (110) having flanges (112, 113, 114, 115) disposed in a star arrangement and pairs of which delimit trunking, said flanges being provided at their edges (122, 123, 124, 125) with means for clipping on cover sections (131, 132, 133, 134) for said trunking, **characterised in that**, in cross section, said cover sections (131, 132, 133, 134) each have a rounded shape with a summit (S₁) and two edges (S₂) on respective opposite sides of said summit (S₁), so that when said column is closed, the distance (f₁) defined by the chord (Cd₁) passing through the summits (S₁) of two adjacent cover sections (131, 132, 133, 134) and the external envelope of said column is less than the distance (f₂) defined by the chord (Cd₂) passing through the edges (S₂) of a cover section (131, 132, 133, 134) and the external envelope of said column.

2. A column (100) according to claim 1, **characterised in that** said skeleton (110) is in one piece.

3. A column (100) according to claim 1 or claim 2, **characterised in that** the clipping means at the edges (122, 123, 124, 125) of the flanges (112, 113, 114, 115) of the skeleton (110) for mounting the cover sections (131, 132, 133, 134) are adapted to co-operate with complementary means on at least one housing (201) for mounting said equipment (200) in the column.

4. A column according to one of claims 1 to 3, **characterised in that** each piece of equipment (200) is mounted on the skeleton (110) of said column so that it projects from the external envelope thereof.

5. A column according to one of claims 1 to 4, **characterised in that** the edge (122, 123, 124, 125) of each flange (112, 113, 114, 115) is in the shape of an anchor each arm of which has on the side facing towards the interior of said column a hook (122a, 123a, 124a, 125a) for clipping on a cover section (131, 132, 133, 134) .

6. A column (100) according to claim 5, **characterised in that** the arms of each anchor have on the outside a concave surface (122b, 123b, 124b, 125b) of limited extent to provide the impression of a groove at the junction of two cover sections (131, 132, 133, 134).

7. A column (100) according to either claim 5 or claim 6, **characterised in that** each flange (112, 113, 114, 115) has a groove for bracing a clip of a cover section (131, 132, 133, 134) facing the internal face of each edge arm.

8. A column (100) according to any preceding claim, **characterised in that** the skeleton (110) has at its centre a tubular conduit (111) adapted to receive a rod (172) for fixing it to the ceiling and said rod (172) carries a system for pressing said skeleton (110) onto the floor.

9. A column (100) according to claim 8, **characterised in that** the internal face of said tubular conduit (111) carries longitudinal ribs (117), pairs of which delimit grooves (118) for slidably mounting said rod (172).

10. A column (100) according to either claim 8 or claim 9, **characterised in that** the external face of said tubular conduit (111) forming the bottom of said trunking carries radial partitions (116) which are shorter than said flanges (112, 113, 114, 115), each radial partition (116) delimiting two compartments at the bottom of the respective trunking.

11. A column (100) according to any preceding claim, **characterised in that** the skeleton (110) has four flanges (112, 113, 114, 115) and the flanges of each pair of adjacent flanges delimit trunking with the same cabling capacity.

12. A column (100) according to any preceding claim, **characterised in that** it has a cup-shaped finishing cover (150) at the top and a plinth (160) for supporting it on the floor at the bottom.

13. A column (100) according to any preceding claim, **characterised in that** said skeleton (110) is made of metal.

14. A column (100) according to any preceding claim, **characterised in that** said cover sections (131, 132, 133, 134) are made of plastics material.

15. A column (100) according to any preceding claim, **characterised in that** said cover sections (131, 132, 133, 134) are made of metal.

## Patentansprüche

1. Säule (100) zum Tragen von Installationsgeräten (200) zum Schalten und/oder Verteilen von Energie und/oder zum Führen von Kabeln oder Leitern zur Energieübertragung, mit einer Tragkonstruktion (110), die sternförmig angeordnete Flügel (112, 113, 114, 115) aufweist, die paarweise Kabelkanäle begrenzen, wobei die Flügel an ihren Enden (122, 123, 124, 125) mit Mitteln zum Verrasten von Deckelstücken (131, 132, 133, 134) zum Verschluss der Kabelkanäle versehen sind, **dadurch gekennzeichnet, dass** die Deckelstücke (131, 132, 133, 134) im Querschnitt gesehen jeweils eine abgerundete Form mit einem Scheitelpunkt (S₁) und beidseits des Scheitelpunkts (S₁) zwei Randteilen (S₂) aufweisen, so dass bei geschlossener Säule der Abstand (f₁) zwischen der durch die Scheitelpunkte (S₁) von zwei nebeneinanderliegenden Deckelstücken (131, 132, 133, 134) verlaufenden Linie (Cd₁) und dem Außenmantel der Säule kleiner ist als der Abstand (f₂) zwischen der durch die Randteile (S₂) eines Deckelstücks ( 131, 132, 133, 134) verlaufenden Linie (Cd₂) und dem Außenmantel der Säule.

2. Säule (100) nach Anspruch 1,
**dadurch gekennzeichnet, dass** die Tragkonstruktion (110) ein einstückiges Teil ist.

3. Säule (100) nach einem der Ansprüche 1 oder 2,
**dadurch gekennzeichnet, dass** die am Ende (122, 123, 124, 125) der Flügel (112, 113, 114, 115) der Tragkonstruktion (110) zur Montage der Deckelstücke (131, 132, 133, 134) vorgesehenen Rastmittel mit komplementären Mitteln zusammenzuwirken vermögen, die auf wenigstens einer Dose (201) zur Montage des Installationsgerätes (200) in der Säule vorgesehen sind.

4. Säule nach einem der Ansprüche 1 bis 3,
**dadurch gekennzeichnet, dass** jedes Installationsgerät (200) so an dem Tragwerk (110) der Säule montiert ist, dass es an deren Außenmantel vorsteht.

5. Säule nach einem der Ansprüche 1 bis 4,
**dadurch gekennzeichnet, dass** das Ende (122, 123, 124, 125) eines jeden Flügels (112, 113, 114, 115) die Form eines Ankers hat, der an jedem seiner Arme an der nach innen in die Säule weisenden Seite einen Haken (122a, 123a, 124a, 125a) zum Verrasten eines Deckelstücks (131, 132, 133, 134) aufweist.

6. Säule (100) nach Anspruch 5,
**dadurch gekennzeichnet, dass** die Arme eines jeden Ankers an der Außenseite eine konkave Oberfläche (122b, 123b, 124b, 125b) mit begrenzter Ausdehnung aufweisen, die wie eine Rille an der Verbindungsstelle zwischen zwei Deckelstücken (131, 132, 133, 134) aussieht.

7. Säule (100) nach einem der Ansprüche 5 oder 6,
**dadurch gekennzeichnet, dass** jeder Flügel (112, 113, 114, 115) gegenüber der Innenseite eines jeden äußeren Arms eine Nut zum Abstützen einer Rastlasche eines Deckelstücks (131, 132, 133, 134) aufweist.

8. Säule (100) nach einem der vorhergehenden Ansprüche,
**dadurch gekennzeichnet, dass** die Tragkonstruktion (110) in ihrer Mitte einen rohrförmigen Kanal (111) aufweist, der eine Stange (172) zur Befestigung an der Decke aufzunehmen vermag, wobei die Stange (172) ein System zum Abstützen der Tragkonstruktion (110) am Boden trägt.

9. Säule (100) nach Anspruch 8,
**dadurch gekennzeichnet, dass** der rohrförmige Kanal (111) an seiner Innenseite mit Längsrippen (117) versehen ist, die paarweise Rillen (118) zur gleitenden Montage der Stange (172) begrenzen.

10. Säule (100) nach einem der Ansprüche 8 oder 9,
**dadurch gekennzeichnet, dass** der rohrförmige Kanal (111) an seiner den Boden der Kabelkanäle bildenden Außenseite mit radialen Trennwänden (116) versehen ist, deren Länge geringer ist als die der Flügel (112, 113, 114, 115), wobei jede radiale Trennwand (116) zwei Kammern am Boden des Kabelkanals begrenzt.

11. Säule (100) nach einem der vorhergehenden Ansprüche,
**dadurch gekennzeichnet, dass** die Tragkonstruktion (110) vier Flügel (112, 113, 114, 115) aufweist, die paarweise vier Kabelkanäle mit dem gleichen Verdrahtungsvolumen begrenzen.

12. Säule (100) nach einem der vorhergehenden Ansprüche,
**dadurch gekennzeichnet, dass** sie an ihrem oberen Ende mit einer schalenförmigen Abschlusshaube (150) und an ihrem unteren Ende mit einem Sockel (160) zur Abstützung am Boden versehen ist.

13. Säule (100) nach einem der vorhergehenden Ansprüche,
**dadurch gekennzeichnet, dass** die Tragkonstruktion (110) aus Metall ausgeführt ist.

14. Säule (100) nach einem der vorhergehenden Ansprüche,
**dadurch gekennzeichnet, dass** die Deckelstücke (131, 132, 133, 134) aus Kunststoff ausgeführt sind.

15. Säule (100) nach einem der vorhergehenden Ansprüche,
**dadurch gekennzeichnet, dass** die Deckelstücke (131, 132, 133, 134) aus Metall ausgeführt sind.
